# EUROPEAN PATENT APPLICATION

(11) **EP 4 170 466 A1**
(43) Date of publication of application: **26.04.2023**
(21) Application number: 20941609.8
(22) Date of filing: 14.12.2020
(51) Int. Cl.: G06F 3/01, G06K 9/00

(54) **INTERACTION METHOD AND APPARATUS BASED ON VEHICLE-MOUNTED DIGITAL PERSON, AND STORAGE MEDIUM**

(30) Priority: 23.06.2020 CN 202010581363
(71) Applicant: Shanghai Lingang Jueying Intelligent Technology Co., Ltd., Shanghai 200232 (CN)
(72) Inventor: ZHOU, Qunyan, Shanghai 200232 (CN); ZENG, Bin, Shanghai 200232 (CN); LI, Ke, Shanghai 200232 (CN); WU, Yangping, Shanghai 200232 (CN); XU, Liang, Shanghai 200232 (CN); XU, Qinqin, Shanghai 200232 (CN); LIN, Nan, Shanghai 200232 (CN); WANG, Yusheng, Shanghai 200232 (CN)
(74) Representative: Bandpay & Greuter
(86) International application number: PCT/CN2020/136256
(87) International publication number: WO 2021/258672

(57) **Abstract**

An interaction method and apparatus based on a vehicle-mounted digital person, and storage medium are provided, wherein the method comprises: obtaining a video stream of a region in a vehicle (101); detecting relative position information of an object getting on or off the vehicle according to an image in the video stream (102), wherein the relative position information includes first relative position information of the object in the image or second relative position information of the object and the vehicle; generating an animation of a digital person executing a corresponding turning action according to the relative position information, and displaying the animation on a display device disposed in the vehicle (103).

## Description

### CROSS-REFERENCE TO RELATED APPLICATIONS

The present disclosure claims the priority of a Chinese patent application filed with CNIPA on June 23, 2020, with the application No. 202010581363.4 and the title "Interaction Method and Apparatus Based on Vehicle-mounted Digital Person, and Storage Medium", all contents of which are incorporated herein by reference.

### TECHNICAL FIELD

The present disclosure relates to the field of augmented reality, and in particular to an interaction method and apparatus based on a vehicle-mounted digital person, and a storage medium.

### BACKGROUND

Nowadays, a robot can be displaced in a vehicle, and when people enter into the vehicle, the robot can interact with them in the vehicle. However, the modes for the interaction between the robot and people in the vehicle are relatively fixed without humanization.

### SUMMARY

The present disclosure provides an interaction method and apparatus based on a vehicle-mounted digital person, and a storage medium.

According to a first aspect of the embodiments of the present disclosure, a method for interaction based on a vehicle-mounted digital person is provided. The method comprises: obtaining a video stream of a region in a vehicle; and detecting relative position information of an object getting on or off the vehicle according to an image in the video stream, wherein the relative position information includes first relative position information of the object getting on or off the vehicle in the image or second relative position information of the object and the vehicle; generating an animation of a digital person executing a corresponding turning action according to the relative position information, and displaying the animation on a display device disposed in the vehicle.

In some embodiments, the detecting the relative position information of the object getting on or off the vehicle according to the image in the video stream, includes: determining an image coordinate region where at least one part of the object getting on or off the vehicle is located in an image coordinate system corresponding to the image; using the image coordinate region as the first relative position information of the object getting on or off the vehicle in the image.

In some embodiments, detecting the relative position information of the object getting on or off the vehicle according to the image in the video stream, includes: determining an image coordinate region where at least one part of the object getting on or off the vehicle is located in an image coordinate system corresponding to the image; determining a vehicle interior coordinate region corresponding to the image coordinate region where the at least one part of the object getting on or off the vehicle is located, according to a mapping relationship between coordinates of the image in the image coordinate system and coordinates of the vehicle interior; using the vehicle interior coordinate region as the second relative position information of the object and the vehicle.

In some embodiments, generating, according to the relative position information, the animation of the digital person executing the corresponding turning action, and displaying the animation on the display device disposed in the vehicle, including: determining a target orientation corresponding to the relative position information, according to a pre-established mapping relationship between position information in the image and an orientation of the digital person; and generating the animation of the digital person turning towards the target orientation and displaying the animation on the display device disposed in the vehicle.

In some embodiments, generating, according to the relative position information, the animation of the digital person executing the corresponding turning action, and displaying the animation on the display device disposed in the vehicle, including: in response to the detected relative position information of the object getting on or off the vehicle including multiple relative positions of multiple objects getting on or off the vehicle, determining a target relative position in the multiple relative positions; generating, according to the target relative position, an animation of the digital person executing a corresponding turning action, and displaying the animation on the display device disposed in the vehicle.

In some embodiments, the determining the target relative position in the multiple relative positions in response to the detected relative position information of the object getting on or off the vehicle including the multiple relative positions of the multiple objects getting on or off the vehicle, including: in response to the relative position information of the object getting on or off the vehicle including the multiple relative positions of the multiple objects getting on or off the vehicle, according to a pre-determined priority order of different position information, determining the relative position with a highest priority in the multiple relative positions as the target relative position.

In some embodiments, the priority order of the different position information includes at least one of the following: a priority of the position information corresponding to a driving region is higher than a priority of the position information corresponding to a front passenger region; a priority of the position information corresponding to the front row region is higher than a priority of the position information corresponding to the rear row region; a priority of the position information corresponding to a dedicated seat is higher than a priority of the position information corresponding to a non-dedicated seat.

In some embodiments, before detecting the relative position information of the object getting on or off the vehicle according to the image in the video stream, the method further includes: determining an intention of the object to get on or off the vehicle based on multiple images with a time sequence relationship in the video stream, and determining the object getting on or off the vehicle according to the intention of the object to get on or off the vehicle.

In some embodiments, the determining the intention of the object to get on or off the vehicle based on the multiple images with the time sequence relationship in the video stream, including at least one of the following: in response to at least one part of the object being detected in the multiple images in a range with a distance from the vehicle door less than a predetermined distance, determining the intention of the object to get off the vehicle; in response to no part of the object being detected in the multiple images in a range with a distance from the vehicle door less than a predetermined distance and the vehicle door being in an open state, determining the intention of the object to get on the vehicle.

In some embodiments, the method further includes detecting attribute information of the object getting on or off the vehicle based on the image in the video stream; according to the attribute information of the object getting on or off the vehicle, generating and displaying an animation of the digital person broadcasting or displaying multimedia information corresponding to the attribute information.

In some embodiments, the object getting on or off the vehicle includes at least one of the following: human or pets; the attribute information of the object includes at least one of the following: identity information, gender information or category information; the multimedia information includes at least one of the following: expression information, movement information, or voice information.

According to a second aspect of the embodiments of the present disclosure, an interaction apparatus based on a vehicle-mounted digital person is provided. The apparatus includes: an obtaining module, configured to obtain a video stream in a region in a vehicle; a relative position detecting module, configured to detect relative position information of an object getting on or off the vehicle according to an image in the video stream, wherein the relative position information includes: first relative position information of the object getting on or off the vehicle in the image or second relative position information of the object getting on or off the vehicle and the vehicle; a first interacting module, configured to generate, according to the relative position information, an animation of the digital person executing a corresponding turning action, and display the animation on a display device disposed in the vehicle.

In some embodiments, the relative position detecting module includes a first determining sub-module for determining an image coordinate region where at least one part of the object getting on or off the vehicle is located in an image coordinate system corresponding to the image; and a second determining sub-module for taking the image coordinate region as the first relative position information of the object getting on or off the vehicle in the image.

In some embodiments, the relative position detecting module includes a third determining sub-module, configured to determine an image coordinate region where at least one part of the object getting on or off the vehicle is located in an image coordinate system corresponding to the image; a fourth determining sub-module, configured to determine a vehicle interior coordinate region corresponding to the image coordinate region where at least one part of the object getting on or off the vehicle is located according to a mapping relationship between the coordinates of the image in the image coordinate system and the coordinates of the vehicle interior; and a fifth determining sub-module, configured to use the vehicle interior coordinate region as the second relative position information of the object getting on or off the vehicle and the vehicle.

In some embodiments, the first interacting module includes: an orientation determining sub-module, configured to determine a target orientation corresponding to the relative position information according to a pre-established mapping relationship between position information in the image and an orientation of the digital person; a first interacting sub-module, configured to generate the animation of the digital person turning towards the target orientation and display the animation on the display device disposed in the vehicle.

In some embodiments, the first interacting module includes: a sixth determining sub-module configured to, in response to the detected relative position information of the object getting on or off the vehicle including multiple relative positions of multiple objects getting on or off the vehicle, determining a target relative position in the multiple relative positions; and a second interacting sub-module configured to, generate, according to the target relative position, the animation of the digital person executing the corresponding turning action, and display the animation on the display device disposed in the vehicle.

In some embodiments, the sixth determining sub-module includes: a determining unit configured to, in response to the detected relative position information of the object getting on or off the vehicle includes multiple relative positions of multiple objects getting on or off the vehicle, determine a relative position of highest priority in the multiple relative positions as the target relative position according to a predetermined priority order of different position information.

In some embodiments, the priority order of different position information includes at least one of the following: a priority of position information corresponding to an driving region is higher than a priority of position information corresponding to a front passenger region; a priority of position information corresponding to a front row region is higher than a priority of position information corresponding to a rear row region; a priority of position information corresponding to a dedicated seat is higher than a priority of position information corresponding to a non-dedicated seat.

In some embodiments, the apparatus further includes: a getting on or off intention determining module, configured to determine an intention of the object to get on or off the vehicle based on multiple images having a time sequence relationship in the video stream; and an object getting on or off the vehicle determining module, configured to determine the object getting on or off the vehicle according to the intention of the object to get on or off the vehicle.

In some embodiments, the getting on or off intention determining module includes at least one of the following: a seventh determining sub-module configured to, in response to at least one part of the object being detected in the multiple images in a range with a distance from a vehicle door less than a predetermined distance, determine the intention of the object to get off the vehicle; an eighth determining sub-module configured to, in response to no part of the object being detected in the multiple images in the range with the distance from the vehicle door less than the predetermined distance and the vehicle door being in an open state, determine the intention of the object to enter the vehicle.

In some embodiments, the apparatus further includes: an attribute information detecting module, configured to detect the attribute information of the object getting on or off the vehicle based on the image in the video stream; and a second interacting module configured to, according to the attribute information of the object getting on or off the vehicle, generate and display an animation of the digital person broadcasting or displaying multimedia information corresponding to the attribute information.

In some embodiments, the object getting on or off the vehicle includes at least one of the following: human or pets; the attribute information of the object includes at least one of the following: identity information, gender information or category information; the multimedia information includes at least one of the following: expression information, movement information, or voice information.

According to a third aspect of the embodiments of the present disclosure, a computer-readable storage medium is provided, which stores a computer program, wherein a processor when executing the computer program is used to perform the interaction method based on a vehicle-mounted digital person according to any one of the above-mentioned embodiments in the first aspect.

According to a fourth aspect of the embodiments of the present disclosure, an interaction device based on a vehicle-mounted digital person is provided, including: a processor, a memory for storing executable instructions of the processor, wherein the processor is configured to, when calls the executable instructions stored in the memory, achieve the interaction method according to any one of the above-mentioned embodiments in the first aspect.

According to a fifth aspect of the embodiments of the present disclosure, a computer program product is provided, which includes computer-readable codes, wherein, when the computer-readable codes are running on a device, a processor of the device is used to execute instructions for achieving an interaction method based on a vehicle-mounted digital person according to any one of the above-mentioned embodiments.

In the present disclosure, the technical solutions provided by the embodiments can include the following beneficial effects.

In the embodiments of the present disclosure, by analyzing an image or images in a video stream of a region in the vehicle, the relative position information of an object getting on or off a vehicle is detected, and an animation of a digital person executing a corresponding turning action is generated based on the relative position information, and the animation is displayed on a display device disposed in the vehicle. Through detection and analysis of the image or images in the video stream, in case where an object is getting on or off the vehicle, an animation of the digital person executing a corresponding turning action is generated and displayed, making the manner of human-machine interaction better conforming to human interaction habits, and the interaction process more natural. Therefore, people feel warm, pleasure, comfort and improved sense of accompany from the human-machine interaction.

It should be understood that the above general description and the following detailed description are only illustrative and explanatory, and do not limit the present disclosure.

### BRIEF DESCRIPTION OF THE DRAWINGS

The drawings herein are incorporated into the specification and form a part thereof, showing embodiments consistent with the present disclosure, and are used together with the specification to explain the principles of the present disclosure.
FIG. 1 is a flowchart of an interaction method based on a vehicle-mounted digital person shown according to an exemplary embodiment in the present disclosure;
FIG. 2 is a flowchart of step 102 shown according to an exemplary embodiment in the present disclosure;
FIG. 3 is a flowchart of step 102 shown according to another exemplary embodiment in the present disclosure;
FIG. 4 is a flowchart of step 103 shown according to an exemplary embodiment in the present disclosure;
FIG. 5 is a flowchart of step 103 shown according to another exemplary embodiment in the present disclosure;
FIG. 6 is a flowchart of an interaction method based on a vehicle-mounted digital person shown according to another exemplary embodiment in the present disclosure;
FIG. 7 is a flowchart of step 104 shown according to an exemplary embodiment in the present disclosure;
FIG. 8 is a flowchart of an interaction method based on a vehicle-mounted digital person shown according to another exemplary embodiment in the present disclosure;
FIG. 9 is a schematic diagram of a vehicle-mounted digital person shown according to an exemplary embodiment in the disclosure;
FIG. 10 is a block diagram of an interaction apparatus based on a vehicle-mounted digital person shown according to an exemplary embodiment in the present disclosure;
FIG. 11 is a schematic diagram showing a hardware structure of an interaction apparatus based on a vehicle-mounted digital person shown according to an exemplary embodiment in the present disclosure.

### DETAILED DESCRIPTION OF THE EMBODIMENTS

The exemplary embodiments will be illustrated in detail, and examples thereof are shown in the accompanying drawings. When the following description refers to the drawings, the same numbers in different drawings indicate the same or similar elements, unless otherwise indicated. The implementation manners described in the following exemplary embodiments do not represent all implementation manners consistent with the present disclosure. Instead, they are only examples of devices and methods consistent with some aspects of the present disclosure, as detailed in the appended claims.

The terminology used in the present disclosure is solely for the purpose of describing particular embodiments, and is not intended to restrict the present disclosure. The singular forms "a", "said" and "the" used in the present disclosure and the appended claims are also intended to include plural forms, unless the context clearly indicates other meanings. It should also be understood that the term "and/or" as used in herein refers to and contains any or all possible combinations of one or more associated listed items.

It should be understood that, although such terms as first, second, third or the like may be used to describe various information in the present disclosure, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein can be interpreted as "upon", "when..." or "in response to determining".

The embodiments of the present disclosure provide an interaction method based on a vehicle-mounted digital person, which can be applied to dirigible machines, such as smart vehicles, smart cabins simulating vehicle driving and the like.

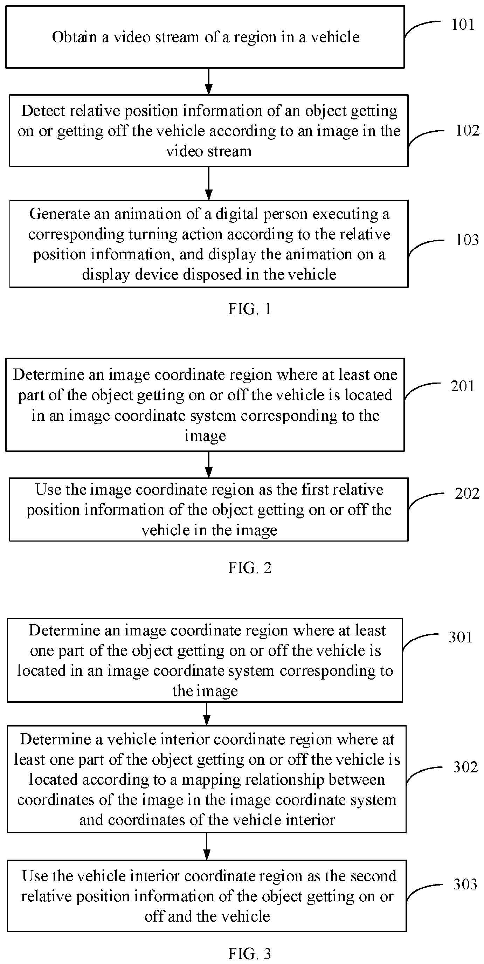

As shown in FIG. 1, FIG. 1 illustrates an interaction method based on a vehicle-mounted digital person according to an exemplary embodiment, including the steps 101-103.

In step 101, a video stream of a region in a vehicle is obtained.

In the embodiments of the present disclosure, the video stream regarding the region in the vehicle can be obtained through a vehicle-mounted camera. The camera can be disposed on a central console, a front windshield, an interior rear-view mirror, or any other location that can capture an interior region of the vehicle. The interior region includes at least one of the following: a driving region, a front passenger region and a rear row region.

In step 102, relative position information of an object getting on or off the vehicle is detected according to an image in the video stream.

In the embodiments of the present disclosure, the object getting on or off the vehicle includes at least one of the following: human and pets. The relative position information includes first relative position information or second relative position information, wherein the first relative position information is the relative position information of the object getting on or off the vehicle in the image of the video stream, which can be represented by an image coordinate region of the object in an image coordinate system, and the second relative position information is the relative position information of the object getting on or off the vehicle with the vehicle, which can be represented by an vehicle interior coordinate region of the object getting on or off the vehicle in the vehicle interior coordinate system.

In step 103, an animation of a distal person executing a corresponding turning action is generated according to the relative position information, and the animation is displayed on a display device disposed in the vehicle.

In the embodiments of the present disclosure, the digital person is an avatar generated by software, and can be displayed on a display device installed in the vehicle, where the display device may include, but is not limited to, a central console display screen or a vehicle-mounted tablet. After determining the relative position information of the object getting on or off the vehicle, it is possible to generate and display the animation of the digital person executing the corresponding turning action on the display device according to the relative position information, for example to generate and display an animation in which the digital person turns from a previous orientation towards the orientation of the object getting on or off the vehicle.

In the above embodiments, by analyzing the image in the video stream of the region inside the vehicle, the relative position information of the object getting on or off the vehicle is detected, and the animation of the digital person executing a corresponding turning action is generated according to the relative position information and is displayed on the display device disposed in the vehicle. Through detection and analysis of the image or images in the video stream, in case where an object is getting on or off the vehicle, an animation of the digital person executing a corresponding turning action is generated and displayed, making the manner of human-machine interaction better conforming to human interaction habits, and the interaction process more natural. Therefore, people feel warm, pleasure, comfort and improved sense of accompany from the human-machine interaction. For example, in case when a person is getting on the vehicle, the interaction method based on the vehicle-mounted digital person provided by the embodiments of the present disclosure can accurately determine the direction in which the person is from without requiring any additional language or action input of the person, so as to realize a real senseless recognition and interaction.

In some embodiments, in case where the relative position information of the object getting on or off the vehicle includes the first relative position information of the object getting on or off the vehicle in the image, for example as shown in FIG.2, step 102 can include steps 201-202.

In step 201, in an image coordinate system corresponding to the image, an image coordinate region where at least one part of the object getting on or off the vehicle is located is determined.

In the embodiments of the present disclosure, the image coordinate system is a two-dimensional coordinate system corresponding to the image in the video stream. In an example, at least one part of the object getting on or off the vehicle in the image can be subjected to regional detection by a pre-trained Region Proposal Network (RPN), and the at least one part of the object may include, but is not limited to, face, hand, torso and so on. By regional detection, the image coordinate region where at least one part of the object getting on or off the vehicle is located can be determined.

In step 202, the image coordinate region is used as the first relative position information of the object getting on or off the vehicle in the image.

For example, if the image coordinate region where at least one part of the object getting on or off the vehicle is located is the image coordinate region 1 in the image coordinate system, the image coordinate region 1 is used as the first relative position information of the object getting on or off the vehicle in the image.

In the above embodiments, a regional detection can be performed to an object getting on or off the vehicle, to determine the image coordinate region where at least one part of that object getting on or off the vehicle is located and use the determined image coordinate region as a first relative position. Subsequently, according to the first relative position, it is possible to generate and display an animation of the digital person executing a corresponding turning action with high availability.

In some embodiments, in case where the relative position information of the object getting on or off the vehicle includes second relative information of the object getting on or off the vehicle and the vehicle, as shown in FIG.3, step 102 can include steps 301-303.

In step 301, in the image coordinate system corresponding to the image, an image coordinate region where at least one part of the object getting on or off the vehicle is located is determined.

In the embodiments of the present disclosure, the manner similar to step 201 can be adopted to determine the image coordinate region where at least one part of the object getting on or off the vehicle is located and details are not described herein again.

In step 302, according to a mapping relationship between the coordinates of the image in the image coordinate system and the coordinates of the vehicle interior, a vehicle interior coordinate region corresponding to the image coordinate region where at least one part of the object getting on or off the vehicle is located is determined.

In the embodiments of the present disclosure, the vehicle interior coordinate region is a coordinate region within the vehicle interior coordinate system. The vehicle interior coordinate system is a three-dimensional coordinate system that covers the interior of the vehicle.

In the embodiments of the present disclosure, the mapping relationship between the image coordinates in the image coordinate system and the vehicle interior coordinates in the vehicle interior system is pre-determined. After the image coordinate region where at least one part of the object getting on or off the vehicle is located is determined, the vehicle interior coordinate region corresponding to the object getting on or off the vehicle can be determined according to the mapping relationship.

In step 303, the vehicle interior coordinate region is used as the second relative position information of the object getting on or off the vehicle and the vehicle.

For example, if the image coordinate region where at least one part of the object getting on or off the vehicle is located is the image coordinate region 1 in the image coordinate system, and the vehicle interior coordinate region corresponding to this image coordinate region 1 is a driving region according to the mapping relationship, the driving region is determined as the second relative position information of the object getting on or off the vehicle and the vehicle.

In the above-mentioned embodiments, on the basis of determining the image coordinate region where at least one part of the object getting on or off the vehicle is located, the vehicle interior coordinate region corresponding to the object getting on or off the vehicle can be determined according to the mapping relationship between the coordinates of the image in the image coordinate system and the coordinates of the vehicle interior in the vehicle interior system, and the vehicle interior coordinate region can be used as a second relative position of the object getting on or off the vehicle and the vehicle, so as to generate and display the animation of the digital person executing the corresponding turning action according to the second relative position, with high availability.

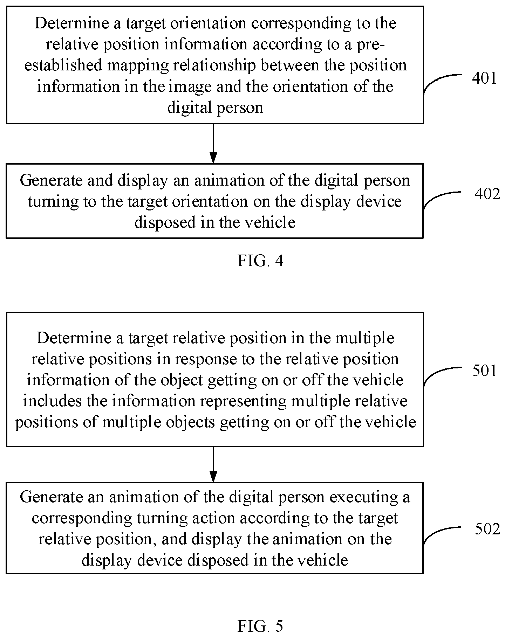

In some embodiments, as shown in FIG.4, step 103 can include steps 401-402.

In step 401, a target orientation corresponding to the relative position information is determined according to the pre-established mapping relationship between the position information in in the image and the orientation of the digital person.

In the embodiments of the present disclosure, the mapping relationship between the position information in the image and the orientation of the digital person is pre-established. For example, the position information belonging to a region position 1 in the image corresponds to a south-west orientation of the digital person, and the position information belonging to a region position 2 corresponds to a south-east orientation of the digital person, etc. According to this mapping relationship, when the relative position information is determined, a corresponding target orientation can be determined.

In step 402, an animation of the digital person executing a turning action towards the orientation is generated and displayed on the display device disposed in the vehicle.

In the embodiments of the present disclosure, the digital person has already shown on the display device. When the target orientation is determined, an animation of the digital person turning to the target orientation can be generated and displayed. For example, if the digital person is currently facing the south direction, and the target orientation is southwest, an animation will be generated showing that the digital person is turning from the south direction to the southwest direction.

In the above embodiments, according to the mapping relationship between the position information in the image and the orientation of the digital person, the target orientation corresponding to the relative position information of the object getting on or off the vehicle can be determined, and the animation of the digital person turning to the target orientation is generated and displayed. Therefore, in case where there is an object getting on or off the vehicle, the digital person can turn to the corresponding target orientation, making the way of human-machine interaction better conforming with human interaction habits, and the interaction process more natural. Therefore, people feel warm, pleasure, comfort and improved sense of accompany from the human-machine interaction.

In some embodiments, as shown in FIG.5, step 103 can include steps 501-502.

In step 501, in response to the relative position information of the object getting on or off the vehicle includes information representing multiple relative positions of multiple objects getting on or off the vehicle, a target relative position among the multiple relative positions is determined.

In the embodiments of the present disclosure, in case where the detected relative position information of the object getting on or off the vehicle includes the information representing multiple relative positions, for example, there are a plurality of objects getting on or off the vehicle simultaneously, or some of them are getting on the vehicle while others are getting off, a target relative position in the multiple relative positions can be determined.

In step 502, an animation of the digital person executing the corresponding turning action is generated according to the target relative position, and the animation is displayed on the display device disposed in the vehicle.

In the embodiments of the present disclosure, according to the target relative position in the multiple relative positions, the animation of the digital person executing the corresponding turning action is generated and displayed on the display device disposed in the vehicle.

For example, if there are a plurality of objects getting on the vehicle at the same time, an animation of the digital person turning towards the target orientation is generated and displayed, wherein the target orientation is the orientation corresponding to the target relative position.

In some embodiments, step 501 includes:
In response to the detected relative position information of the object getting on or off the vehicle includes the information of multiple relative positions of multiple objects getting on or off the vehicle, according to a pre-determined priority order of different position information, the relative position of the highest priority in the multiple relative positions is determined as the target relative position.

In the embodiments of the present disclosure, the priority order of different position information includes at least one of the following: the priority of the position information corresponding to the driving region is higher than the priority of the position information corresponding to the front passenger region; the priority of the position information corresponding to the front row region is higher than the priority of the position information corresponding to the rear row region; or the priority of the position information corresponding to the dedicated seat is higher than the position information corresponding to the non-dedicated seat.

Wherein, according to the above priority order, if the information representing multiple relative positions of multiple objects getting on or off the vehicle includes at least the position information of the driving region, the priority of the position information of the driving region is higher than the priority of the position information of any other regions. If the information representing the multiple relative positions of the multiple objects getting on or off the vehicle does not include the position information of the driving region, but includes the position information of the front passenger region and the rear row region, then the priority of the position information of the front passenger region is higher than the priority of the position information of the rear row region.

The dedicated seats can include but are not limited to child seats, special seats for other people, etc. If a dedicated seat is installed in the vehicle, the priority of the position information of the dedicated seat can be considered as higher than the priority of the position information corresponding to a non-dedicated seat.

According to the above-mentioned priority order, the relative position with the highest priority among the multiple relative positions can be determined as the target relative position, and subsequently according to this target relative position, the animation of the digital person executing a corresponding turning action is generated and displayed on the display device disposed in the vehicle.

In the above-mentioned embodiment, in case where the detected relative position information of the object getting on or off the vehicle includes the information representing the multiple relative positions of the multiple objects getting on or off the vehicle, depending on the predetermined priority order of the information of different positions, the relative position of the highest priority among the multiple relative positions is determined as the target relative position. Therefore, a target orientation of the digital person is determined according to the target relative position, and the animation of the digital person turning towards the target orientation is generated and displayed. As such, in case where there are a plurality of objects getting on or off the vehicle, the digital person can turn to the object with the highest priority, making the way of human-machine interaction better conforming with human interaction habits, and the interaction process more natural. Therefore, people feel warm, pleasure, comfort and improved sense of accompany from the human-machine interaction.

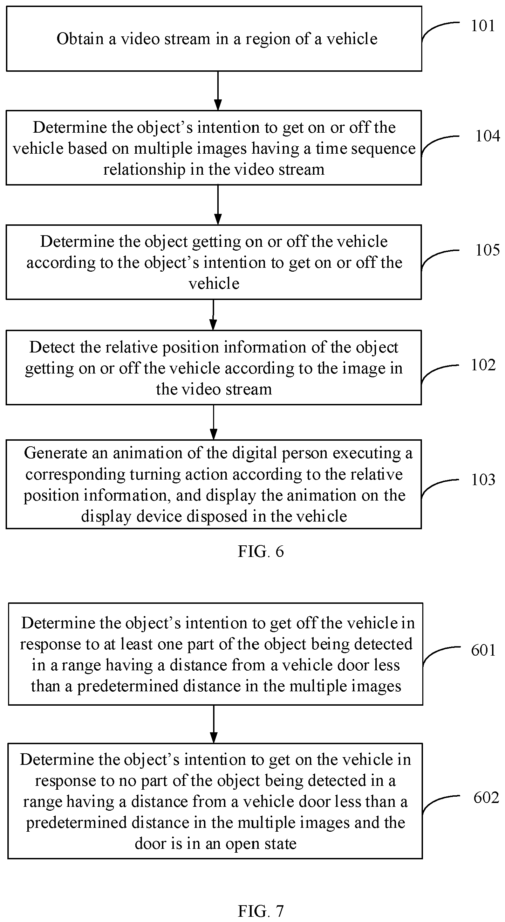

In some embodiments, as shown in FIG.6, before performing step 102, the method can further include steps 104-105.

In step 104, an intention of the object to get on or off the vehicle is determined based on multiple images having a time sequence relationship in the video stream.

In the embodiments of the present disclosure, the multiple images having the time sequence relationship may be multiple images adjacent in a time sequence.

In step 105, according to the intention of the object to get on or off the vehicle, the object getting on or off the vehicle is determined.

In the embodiments of the present disclosure, according to the object's intention to get on the vehicle, the object is determined to be the object entering the vehicle; according to the object's intention to get off the vehicle, the object is determined to be the object exiting the vehicle.

In some embodiments, as shown in FIG.7, step 104 can include as least one of the following step 601 or step 602.

In step 601, in response to detecting at least one part of the object in a range with a distance from a vehicle door less than a predetermined distance in the multiple images, the intention of the object to get off the vehicle is determined.

In the embodiments of the present disclosure, if at least one part of the object, such as hand, head, leg or the like, is detected in the multiple images in a range having a distance from any one vehicle door less than a predetermined distance, the object's intention to get off the vehicle is determined. For example, a pixel region corresponding to any one vehicle door is first detected, and if a hand, head or leg of an object is detected within a range having a predetermined distance from the pixel region, the object's intention to get off the vehicle can be determined accordingly.

In step 602, when no part of an object is detected within a range having a distance from a vehicle door less than a predetermined distance within the multiple images and the vehicle door is in an open state, the object's intention to get on the vehicle is determined.

In the embodiments of the present disclosure, if in the multiple images, a pixel region corresponding to any one vehicle door is first detected but no part of an object is found within a range having a predetermined distance from that pixel region, it means that no object is getting on the vehicle by the vehicle door now. Further, if according to the multiple images, it is found that the vehicle door is open, then it is considered that there is an object willing to enter the vehicle through that open door. As such, the object's intention to get on the vehicle can be determined accordingly.

In the above embodiments, in order to avoid misjudgment, the intention of the object to get on or off the vehicle can be further determined in combination with a detection result from a sensor on the vehicle. Such Sensor may include, but not limited to, a door sensor, a pressure sensor on a seat, etc.

In an example, if a door sensor indicates that the door is unlocked, and a pressure sensor disposed in a seat indicates that an object is seating thereon, and meanwhile if at least one part of the object is detected within the range having a distance from the door less than the predetermined distance in the multiple images, the object's intention to get off the vehicle can be accordingly determined.

In another example, if the door sensor indicates that the door is unlocked, and the pressure sensor disposed in the seat indicates that no object is seating thereon, and meanwhile if no part of the object is detected within the range having a distance from the door less than the predetermined distance in the multiple images and the door is in an open state, then the object's intention to get on the vehicle can be accordingly determined.

In the above embodiments, the object's intention to get on or off the vehicle can be determined in combination with multiple images having a time sequence relationship in the video stream, to further determine the object getting on or off the vehicle, so as to subsequently generate and display the animation of the digital person executing the turning action, with high availability.

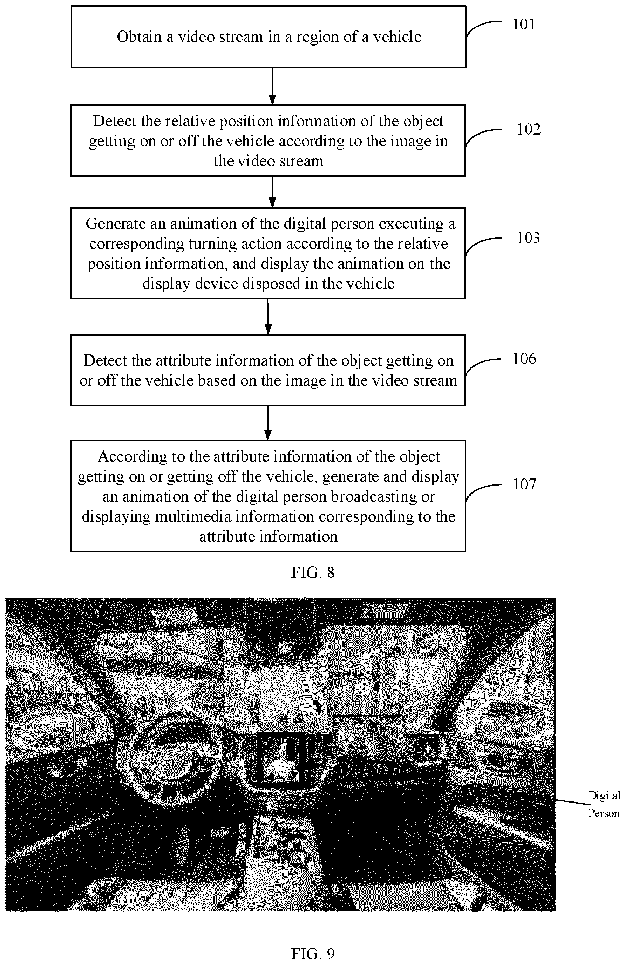

In some embodiments, as shown in FIG. 8, the method further includes steps 106 and 107.

In step 106, attribution information of the object getting on or off the vehicle is detected in the image of the video stream.

In the embodiments of the present disclosure, a facial recognition can be utilized to the image in the video stream to extract the facial features of the object getting on or off the vehicle. By comparing the extracted face features with the pre-stored facial features, the attribute information of the object getting on or off the vehicle can be determined based on the result of comparison. The attribution information of the object includes at least one of the following: identity information, gender information, or category information. Wherein, the identity information is used to indicate the specific identity of the object getting on or off the vehicle, such as Zhang San, Li Si; the gender information is used to indicate the gender of the object getting on or off the vehicle, such as male, female; the category information is used to indicate the type of the object, for example adult, child or pet.

In step 107, according to the attribution information of the object getting on or off the vehicle, an animation of the digital person broadcasting or showing multimedia information corresponding to the attribution information is generated and displayed.

In the embodiments of the present disclosure, the multimedia information includes at least one of the following: expression information, movement information or voice information.

In an example, the attribute information of the object getting on or off the vehicle includes the identity information of Zhang San, the gender information of female, and the category information of adult. Accordingly, as shown in FIG. 9, the digital person corresponding to the attribute information will be generated and displayed on the display device, and further the animation of the digital person broadcasting or showing at least one of expression, movement or voice corresponding to the attribute information will be generated and displayed.

For instance, the digital person may chat with the object within the vehicle, say hello like "Good morning, Zhang San" to the object through the animation including at least one of expression, movement or voice.

If the identity information indicates that the object is getting on the vehicle for the first time, at least one of the object's gender information or category information is combined to broadcast or display a say hello animation such as "Good morning, Madam".

In another example, the digital person can automatically play an animation to ask the object if an introduction of the vehicle is needed. If the object responds "yes", then the digital person begins to introduce the vehicle; and if the object answers "no", the digital person switches to a standby state. The digital person may indicate that the digital person enters a standby state through an animation of at least one of a voice, a movement or an expression.

In the above embodiments, by detecting the attribute information of the object getting on or off the vehicle, the animation of the digital person broadcasting or showing the multimedia information corresponding to the attribute information is generated and displayed, making the interaction modes between the digital person and the people in the vehicle more diversified, and improving the intelligence of the digital person.

In an example, when there are a plurality of objects getting off the vehicle, if the relative position with the highest priority among the multiple relative positions includes the position information of the driving region, then according to the pre-established mapping relationship between the position information in the image and the orientation of the digital person, the target orientation corresponding to the position information of the driving region is determined as the southwest orientation, and the animation of the digital person turning to the southwest orientation is generated and displayed on the display device in the vehicle. Further, according to the attribute information of the object getting on an getting off the vehicle, which herein specifically directed to the attribute information of the object getting off from the driving region, the digital person animation is generated and displayed. For example, the digital person can automatically broadcast "Goodbye" or "Take a break" in voice and/or "Byebye" in expression or movement, or display an animation of at least one of the expression information, movement information, and voice information corresponding to the attribute information of the object.

In another example, when there are a plurality of objects getting on the vehicle at the same time, if the relative position with the highest priority in the multiple relative positions includes the position information of the front passenger region, then according to the pre-established mapping relationship between the position information in the image and the orientation of the digital person, the target orientation corresponding to the position information of the front passenger region is determined as the south-east orientation, and the animation of the digital person turning to the southeast orientation is generated and displayed on the display device in the vehicle. Further, according to the attribute information of the object getting on the vehicle, which herein specifically directed to the attribute information of the object getting on from the front passenger region, the digital person animation is generated and displayed. For example, the digital person can automatically broadcast "Welcome, XXX" in voice and/or "Welcome with applause" in expression or movement, or display an animation of the expression information, movement information or voice information corresponding to the attribute information of the object, such as an animation of "Welcome XXX".

In another example, if there is only one object getting on or off the vehicle, the relative position information can be determined, and then the target orientation corresponding to the relative position information can be determined and the animation of the digital person turning to the target orientation can be generated and displayed. Of course, in case when the object is getting on or off the vehicle, the animation of the digital person broadcasting or displaying the multimedia information corresponding to the attribute information can be generated and displayed. For example, if the object is a pet, then an animation of "Welcome, puppy" is broadcast, etc.

In the above embodiments, the way of human-machine interaction better conforms with human interaction habits, and the interaction process is more natural. Therefore, people feel warm, pleasure, comfort and improved sense of accompany from the human-machine interaction.

Corresponding to the aforementioned method embodiments, the present disclosure also provides the apparatus embodiments.

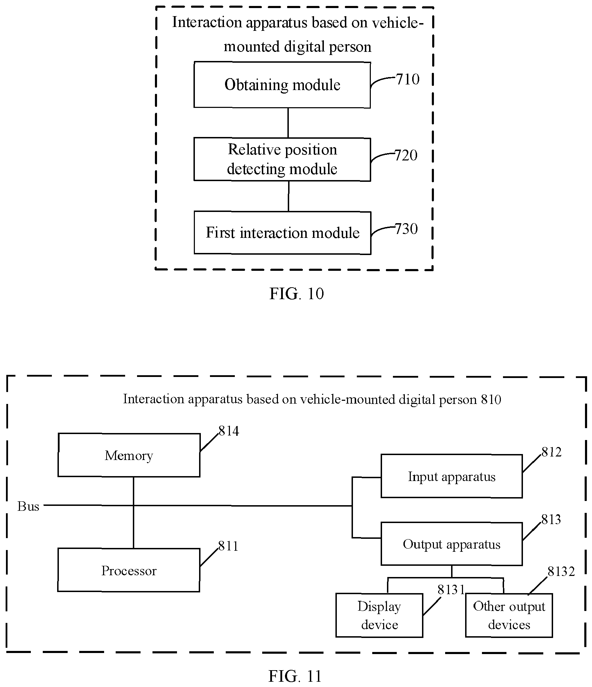

As shown in Figure 10, FIG. 10 is a block diagram of an interaction apparatus based on a vehicle-mounted digital person as shown according to an exemplary embodiment in the present disclosure, wherein the apparatus includes: an obtaining module 710, configured to obtain a video stream in a region of a vehicle; a relative position detecting module 720, configured to detect relative position information of an object getting on or off the vehicle according to an image in the video stream, the relative position information including first relative position information of the object getting on or off the vehicle in the image or second relative position information of the object getting on or off the vehicle and the vehicle; a first interacting module 730, configured to generate an animation of a digital person executing a turning action according to the relative position information and display the animation on a display device disposed in the vehicle.

**In** some embodiments, the relative position detecting module includes a first determining sub-module, configured to determine an image coordinate region where at least one part of the object getting on or off the vehicle is located in an image coordinate system corresponding to the image; and a second determining sub-module, configured to use the image coordinate region as the first relative position information of the object getting on or off the vehicle in the image.

In some embodiments, the relative position detecting module includes a third determining sub-module, configured to determine an image coordinate region where at least one part of the object getting on or off the vehicle is located in the image coordinate system corresponding to the image; a fourth determining sub-module, configured to determine a vehicle interior coordinate region corresponding to the image coordinate region wherein at least one part of the object getting on or off the vehicle is located according to a mapping relationship between the coordinates of the image and the coordinates of the vehicle interior; a fifth determining sub-module, configured to use the vehicle interior coordinate region as the second relative position information of the object getting on or off the vehicle and the vehicle.

In some embodiments, the first interacting module comprises an orientation determining sub-module, configured to determine a target orientation corresponding to the relative position information according to a pre-established mapping relationship between position information in the image and an orientation of the digital person; a first interacting sub-module, configured to generate the animation of the digital person turning to the target orientation and display the animation on the display device disposed in the vehicle.

In some embodiments, the first interacting sub-module includes a sixth determining sub-module configured to, in response to the detected relative position information of the object getting on or off the vehicle including multiple relative positions of multiple objects getting on or off the vehicle, determine a target relative position in the multiple relative positions; a second interacting sub-module configured to, generate the animation of the digital person executing the corresponding turning action according to the target relative position, and display the animation on the display device disposed in the vehicle.

In some embodiments, the sixth determining sub-module includes: a determining unit configured to, in response to the detected relative position information of the object getting on or off the vehicle includes the multiple relative positions of the multiple objects getting on or off the vehicle, determine a relative position of highest priority in the multiple relative positions as the target relative position according to a predetermined priority order of different position information.

In some embodiments, a priority order of different position information includes at least one of the following: a priority of position information corresponding to a driving region is higher than a priority of position information corresponding to a front passenger region; a priority of position information corresponding to a front row region is higher than a priority of position information corresponding to a rear row region; or a priority of position information corresponding to a dedicated seat is higher than a priority of position information corresponding to a non-dedicated seat.

In some embodiments, the apparatus further includes: a getting on or off intention determining module, configured to determine an intention of the object to get on or off the vehicle based on multiple images having a time sequence relationship in the video stream; and an object getting on or off the vehicle determining module configured to, according to the intention of the object to get on or off the vehicle, determine the object getting on or off the vehicle.

In some embodiments, the getting on or off intention determining module includes at least one of the following: a seventh determining sub-module configured to, in response to at least one part of the object being detected in the multiple images in a range with a distance from a vehicle door less than a predetermined distance, determine the intention of the object to get off the vehicle; an eighth determining sub-module configured to, in response to no part of the object being detected in the multiple images in the range with the distance from the vehicle door less than the predetermined distance and the vehicle door being in an open state, determine the intention of the object to enter the vehicle.

In some embodiments, the apparatus further includes: an attribute information detecting module, configured to detect the attribute information of the object getting on or off the vehicle based on the image in the video stream; a second interacting module configured to, according to the attribute information of the object getting on or off the vehicle, generate and display an animation of the digital person broadcasting or displaying multimedia information corresponding to the attribute information.

In some embodiments, the object getting on or off the vehicle includes at least one of the following: human or pets; the attribute information of the object includes at least one of the following: identity information, gender information or category information; the multimedia information includes at least one of the following: expression information, movement information, or voice information.

For the device embodiment, since it basically corresponds to the method embodiment, please refer to the part of the method embodiment. The device embodiment described above is merely schematic, wherein the unit described as a separation member may or may not be physically separate, and the component displayed as a unit may or may not be a physical unit, i. e. may be located in one place, or may be distributed to a plurality of network units. Some or all of the modules may be selected according to actual needs to achieve the purpose of the present disclosure scheme. Persons of ordinary skill in the art can understand and implement it without paying creative labor.

The embodiments of the present disclosure also provide a computer-readable storage medium that stores a computer program. A processor when executes the computer program is used to perform the interaction method based on a vehicle-mounted digital person as described according to any one of the above embodiments.

In some embodiments, the embodiments of the present disclosure provide a computer program product including computer-readable codes. When the computer-readable codes are run on a device, a processor of the device is used to execute instructions used for implementing the interaction method based on a vehicle-mounted digital person as provided according to any one of the above-mentioned embodiments.

The computer program product can be specifically implemented by hardware, software or its combination. In one embodiment, the computer program product is specifically embodied as a computer storage medium. In another embodiment, the computer program product is specifically embodied as a software product, such as a Software Development Kit (SDK) or the like.

The embodiments of the present disclosure also provide an interaction device based on a vehicle-mounted digital person, including: a processor; a memory for storing instructions executable by the processor, wherein the processor is configured to, when calls the executable instructions stored in the memory, implement the above-described interaction method based on a vehicle-mounted digital person.

FIG. 11 is a schematic diagram of a hardware structure of an interaction device based on a vehicle-mounted digital person provided by an embodiment of the present application. The vehicle-mounted digital person-based interaction device 810 includes a processor 811, and may also include an input apparatus 812, an output apparatus 813, and a memory 814. The input apparatus 812, the output apparatus 813, the memory 814, and the processor 811 are mutually connected through a bus.

The memory 814 includes, but is not limited to, random stored memory (RAM), read-only memory (ROM), erasable programmable read-only memory (EPROM), or portable read-only memory (CD-ROM), The memory 814 is used to store relevant instructions and data.

The input apparatus 812 is used for input data and/or signals, and the output apparatus 813 is used to output data and/or signals. The output apparatus 813 and the input apparatus 812 may be independent components or an integral component.

In the embodiments of the present disclosure, the output apparatus 813 includes a display device 8131 and other output devices 8132 that may include but are not limited to an audio output device. The digital person is displayed by the display device 8131, and the animation of the digital person performing the corresponding turning action is also displayed by the display device 8131.

The processor 811 may include one or more processors, for example, one or more central processing units (CPU). In the case that the processor 811 is a CPU, the CPU may be a single-core CPU or a multi-core CPU.

The memory 814 is used to store program codes and data of the network device.

The processor 811 is configured to call the program codes and data in the memory 814, to execute the steps in the above-described method embodiments. For more details, the above method embodiments can be referred and thus will not be repeated here.

It is understood that FIG. 11 merely illustrates a simplified design of an interaction apparatus based on a vehicle-mounted digital person. In practical applications, the interaction apparatus based on a vehicle-mounted digital person may further include other necessary elements, including but not limited to any number of input/output apparatuses, processors, controllers, memory, etc., and all interaction apparatuses that can realize the embodiments of the application are within the protection scope of the present disclosure.

In some embodiments, the functions or modules contained in the apparatuses provided by the embodiments of the present disclosure may be used to perform the methods described in the above method embodiments, and their specific implementation may be described with reference to the above method embodiments, and thus will not be described herein for brevity.

Those skilled in the art, after considering the specification and practicing the invention disclosed herein, will easily think of other embodiments of the present disclosure. The present disclosure aims to cover any variations, uses, or adaptive changes of the present disclosure that follow the general principles of the present disclosure and include common knowledge or customary technical means in the art not disclosed in the present disclosure. The description and the embodiments are to be regarded as exemplary only, and the scope and spirit of the present disclosure are determined according to the appended claims.

The above mentioned are only some embodiments of the present disclosure, and are not intended to limit the present disclosure. Any modification, equivalent replacement, improvement and the like made within the spirit and principles of this disclosure shall be included in the protection scope of the present disclosure.

## Claims

1. An interaction method based on a vehicle-mounted digital person, comprises:
obtaining a video stream of a region in a vehicle;
detecting relative position information of an object getting on or off the vehicle according to an image in the video stream, wherein the relative position information comprises first relative position information of the object getting on or off the vehicle in the image or second relative position information of the object getting on or off the vehicle and the vehicle; and
generating, according to the relative position information, an animation of a digital person executing a corresponding turning action, and displaying the animation on a display device disposed in the vehicle.

2. The method according to claim 1, wherein detecting the relative position information of the object getting on or off the vehicle according to the image in the video stream, comprises:
determining an image coordinate region where at least one part of the object getting on or off the vehicle is located in an image coordinate system corresponding to the image; and
using the image coordinate region as the first relative position information of the object getting on or off the vehicle in the image.

3. The method according to claim 1, wherein detecting the relative position information of the object getting on or off the vehicle according to the image in the video stream, comprises:
determining an image coordinate region where at least one part of the object getting on or off the vehicle is located in an image coordinate system corresponding to the image;
determining a vehicle interior coordinate region corresponding to the image coordinate region where the at least one part of the object getting on or off the vehicle is located, according to a mapping relationship between coordinates of the image in the image coordinate system and coordinates of the vehicle interior; and
using the vehicle interior coordinate region as the second relative position information of the object getting on or off the vehicle and the vehicle.

4. The method according to any one of claims 1 to 3, wherein generating, according to the relative position information, the animation of the digital person executing the corresponding turning action, and displaying the animation on the display device disposed in the vehicle, comprises:
determining a target orientation corresponding to the relative position information, according to a pre-established mapping relationship between position information in the image and an orientation of the digital person; and
generating the animation of the digital person turning towards the target orientation and displaying the animation on the display device disposed in the vehicle.

5. The method according to any one of claims 1 to 4, wherein generating, according to the relative position information, the animation of the digital person executing the corresponding turning action, and displaying the animation on the display device disposed in the vehicle, comprises:
in response to the detected relative position information of the object getting on or off the vehicle comprising multiple relative positions of multiple objects getting on or off the vehicle, determining a target relative position in the multiple relative positions; and
generating, according to the target relative position, the animation of the digital person executing the corresponding turning action, and displaying the animation on the display device disposed in the vehicle.

6. The method according to claim 5, wherein determining the target relative position in the multiple relative positions in response to the detected relative position information of the object getting on or off the vehicle comprising the multiple relative positions of the multiple objects getting on or off the vehicle, comprises:
in response to the relative position information of the object getting on or off the vehicle comprising the multiple relative positions of the multiple objects getting on or off the vehicle, according to a pre-determined priority order of different position information, determining the relative position with a highest priority in the multiple relative positions as the target relative position.

7. The method according to claim 6, wherein the priority order of the different position information comprises at least one of the following:
a priority of position information corresponding to a driving region is higher than a priority of position information corresponding to a front passenger region;
a priority of position information corresponding to a front row region is higher than a priority of position information corresponding to rear row region; or
a priority of position information corresponding to a dedicated seat is higher than a priority of position information corresponding to a non-dedicated seat.

8. The method according to any one of claims 1 to 7, wherein before detecting the relative position information of the object getting on or off the vehicle according to the image in the video stream, the method further comprises:
determining an intention of the object to get on or off the vehicle based on multiple images with a time sequence relationship in the video stream, and
determining the object getting on or off the vehicle according to the intention of the object to get on or off the vehicle.

9. The method of claim 8, wherein determining the intention of the object to get on or off the vehicle based on the multiple images with the time sequence relationship in the video stream, comprises at least one of the following:
in response to at least one part of the object being detected in the multiple images in a range with a distance from a door of the vehicle less than a predetermined distance, determining the intention of the object to get off the vehicle; or
in response to no part of the object being detected in the multiple images in a range with a distance from the door less than a predetermined distance and the door being in an open state, determining the intention of the object to get on the vehicle.

10. The method according to any one of claims 1 to 9, wherein the method further comprises:
detecting attribute information of the object getting on or off the vehicle based on the image in the video stream; and
according to the attribute information of the object getting on or off the vehicle, generating and displaying an animation of the digital person broadcasting or displaying multimedia information corresponding to the attribute information.

11. The method according to claim 10, wherein the object getting on or off the vehicle comprises at least one of the following: human or pets;
the attribute information of the object comprises at least one of the following: identity information, gender information or category information;
the multimedia information comprises at least one of the following: expression information, movement information, or voice information.

12. An interaction apparatus based on a vehicle-mounted digital person, comprises:
an obtaining module, configured to obtain a video stream in a region in a vehicle;
a relative position detecting module, configured to detect relative position information of an object getting on or off the vehicle according to an image in the video stream, wherein the relative position information comprises first relative position information of the object getting on or off the vehicle in the image or second relative position information of the object getting on or off the vehicle and the vehicle; and
a first interacting module, configured to generate, according to the relative position information, an animation of the digital person executing a corresponding turning action, and display the animation on a display device disposed in the vehicle.

13. A computer-readable storage medium storing a computer program, wherein a processor when executing the computer program is configured to perform the interaction method based on a vehicle-mounted digital person according to any one of claims 1 to 11.

14. An interaction device based on a vehicle-mounted digital person, comprises:
a processor;
a memory for storing executable instructions of the processor;
wherein when invoking the executable instructions stored in the memory, the processor is configured to perform the interaction method based on a vehicle-mounted digital person according to any one of claims 1 to 11.

15. A computer program product, comprises computer-readable codes, wherein, when the computer-readable codes are running on a processor, the processor is configured to perform the interaction method based on a vehicle-mounted digital person according to any one of claims 1 to 11.
